# EUROPEAN PATENT SPECIFICATION

(11) **EP 2 104 721 B1**
(45) Date of publication and mention of the grant of the patent: **02.11.2011**
(21) Application number: 08713823.6
(22) Date of filing: 18.01.2008
(51) Int. Cl.: C09J 163/00

(54) **HIGH STRENGTH EPOXY ADHESIVE AND USE THEREOF**
HOCHFESTES EPOXID-HAFTMITTEL UND SEINE VERWENDUNG
ADHÉSIF ÉPOXY À HAUTE RÉSISTANCE ET UTILISATION DE CELUI-CI

(30) Priority: 18.01.2007 GB 0700960
(43) Date of publication of application: 30.09.2009
(73) Proprietor: 3M Innovative Properties Company, Saint Paul, MN 55133-3427 (US)
(72) Inventor: GOEB, Siegfried, D-41453 Neuss (DE); HASENBERG, Dirk, D-41453 Neuss (DE); KLONINGER, Christian, D-41453 Neuss (DE); KOLOWROT, Dirk, D-41453 Neuss (DE); TRASER, Steffen, D-41453 Neuss (DE); GORODISHER, Ilya, Stillwater Minnesota 55082 (US); POCIUS, Alphonsus V. , Dr., Maplewood, Minnesota 55119 (US)
(74) Representative: Kurz, Arnd
(86) International application number: PCT/US2008/051441
(87) International publication number: WO 2008/089410

(56) References cited:
- EP-A- 1 280 842
- WO-A-00/22024
- WO-A-2005/048866
- DATABASE WPI Week 199329 Derwent Publications Ltd., London, GB; AN 1993-232600 XP002481924 -& JP 05 156225 A (AICA KOGYO CO LTD) 22 June 1993 (1993-06-22)
- DATABASE WPI Week 200576 Derwent Publications Ltd., London, GB; AN 2005-737632 XP002481925 -& JP 2005 272813 A (YUKA SHELL EPOXY KK) 6 October 2005 (2005-10-06)

## Description

### Field of the Invention

The invention relates to epoxy-based structural adhesive compositions, particular to epoxy-based compositions, that when cured exhibit properties useful in structural assembly. The invention also relates to uses of the composition and to a process for bonding parts using the composition.

### Background of the Invention

Structural adhesives may be used to replace or augment conventional joining techniques such as welding or mechanical fasteners, such as nuts and bolts, screws and rivets etc. In particular in the transportation industrie, such as automotive, aircraft or watercraft industry structural adhesives can present a light weight alternative to mechanical fasteners. To be suitable as structural adhesives, the adhesives are required to have high mechanical strength and impact resistance.

The inherent brittleness of heat-cured epoxy-based adhesives can be overcome by adding toughening agents to the adhesive compositions which impart greater impact resistance to the cured epoxy compositions. Such attempts include the addition of elastomeric particles polymerized in situ in the epoxide from free-radical polymerizable monomers, the addition of a copolymeric stabilizer, the addition of elastomer molecules or separate elastomer precursor molecules, or the addition of core/shell polymers.

WO 00/22024 describes the use of core/shell polymers as tougheners in structural adhesives based on epoxy resins. The core/shell polymers have a polymerized diene rubbery core and a polyacrylate or polymethacrylate shell.

Other tougheners for epoxy resins based on core/shell polymers have been described in US 5,280,067, US 5,686,509, US 6,180,693, EP 0 449 776 or EP 0 578 613.

A rather large amount of core/shell polymers has typically to be employed to achieve satisfying toughening and/or impact resistance. However, large amounts of toughening agents, such as for example, core/shell polymers lead to an increased viscosity of the adhesive composition and poor handling.

Therefore, there is a need for providing compositions, in particular compositions suitable as structural adhesives, having the same or even improved toughening effect and/or impact resistance at a lower level of toughening agent.

Although the use of tougheners has led to an improved impact resistance for static loads, there still is a need to provide structural epoxy-based adhesives having a good crash resistance, i.e. a good impact resistance on dynamic loads. A good crash-resistance means the ability of an adhesively bonded structure to adsorb energy on upon a sudden impact as it may occur in case of a crash of a vehicle.

Additionally, the epoxy-based adhesives would be desired to show good or improved resistance to ageing.

Furthermore, in certain assembly applications, in particular where spot welding is used to join parts, fast curing adhesives may be desired, which achieve a high or improved adhesive and cohesive strength after short curing periods. For example, in automated assembly lines used in vehicle assembly, predetermined components are joined locally by spotwise induction curing. This results in partially cured areas separated by non-cured areas, where other components may be added to in subsequent process steps prior to the complete curing of the body, for example by thermal treatment of the assembly. These heating periods may be very short, e.g. less than a minute. However, the induction-cured areas are required to have a sufficient adhesive and cohesive strength allowing safe mechanical handling prior to the complete curing of the assembly.

It has now been found that the toughness of epoxy-based adhesive compositions containing toughening agents can be increased by adding one or more acetoacetoxy-functionalized polymers. Structural adhesive composition with good mechanical properties, such as for example, but not limited to, high impact resistance on static and dynamic loads can be prepared. Furthermore compositions can be prepared that achieve good mechanical properties already after very short curing periods.

EP 0 847 410 B1 describes acetoacetoxy-functionalized polymers for generating quickly curing compositions. However, the compositions disclosed are moisture-curing coatings or sealants and are not suitable for use as structural adhesives.

### Summary

In the following there is provided a curable adhesive composition comprising:
(i) one or more epoxy-resins,
(ii) one or more toughening agents,
(iii) one or more curing agent capable of cross-linking the epoxy resins
(iv) one or more acetoacetoxy-functionalized compounds.

An advantage of at least one embodiment of an epoxy-based adhesive provided herein is that it not only has a good or improved cohesive strength and/or adhesive strength but also has a good or improved crash resistance (impact resistance on dynamic loads).

Another advantage of at least one embodiment of an epoxy adhesive provided herein is that it achieves at least the same or even better cohesive strength and/or adhesive strength and/or crash resistance with reduced amounts of toughening agent (e.g. core/shell polymers). Yet another advantage of at least one embodiment of an epoxy adhesive provided herein is its good or improved resistance to ageing. Yet a further advantage of at least one embodiment of an adhesive provided herein is its high curing speed. An advantage of at least one embodiment of a heat curable epoxy adhesive provided herein is that it has two or more of the properties described above.

There is also provided the use of a composition as above for bonding two parts. Additionally, there is provided the use of the composition as above in the manufacturing of a part of a vehicle. Additionally there are provided cured compositions obtainable from the curable compositions above and an article containing the cured compositions.

Furthermore, there is provided a process for joining parts comprising applying a composition as above to a first part, joining the first part and a second part and curing the composition.

Additionally, there is provided a process for preparing an adhesive composition as above comprising combining a composition containing at least one curing agent capable of cross-linking epoxy resins with a composition containing at least one toughening agent and at least one acetoacetoxy-functionalized compound.

### Description of the Figures

The figures show a schematic representation of the dynamic impact (DWI) test.

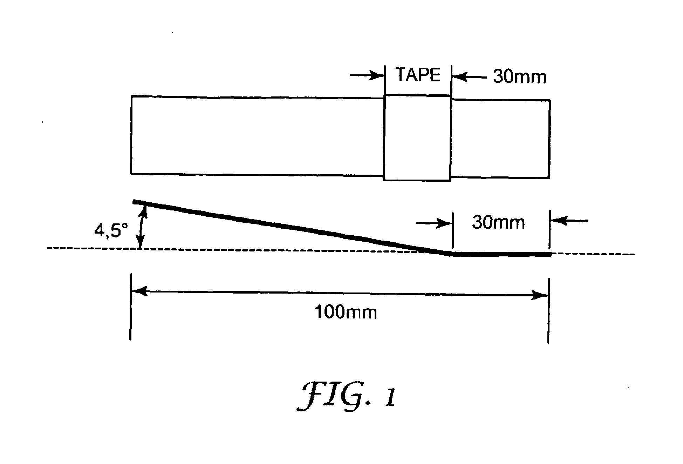

Figure 1 shows the preparation of a test strip (coupon). A tape has been applied to the test strip to separate the test area onto which the adhesive (substrate) is placed. The upper part of figure 1 shows a view of the strip from top. The lower part shows a side view of the strip.
Figure 2 shows a side view of the test wedge (10) on to which the assembled test strips are placed. The test wedge contains the actual wedge (13) and a base (11). The base contains apertures (12) for mounting the wedge on the impact tester.
Figure 3 shows a top view of the test wedge of figure 2. The base is referred to as (11'), the apertures as (12') and the actual wedge as (13').
Figure 4 shows the installation onto the test wedge of the assembled test strips (20') containing two test strips (21', 22') with the adhesive (23') between them. The test is started by dropping the weight (31) onto the assembled test strips.
Figure 5 shows the assembled test strips after the application of the test force by the dropping weight (31).

### Detailed Description

In the following there are provided adhesives having good mechanical properties such as toughness and impact resistance making the adhesives suitable as structural adhesives. In the following there are provided structural adhesives based on epoxy resins. The structural adhesives may be used to replace or augment conventional joining means such as welds or mechanical fasteners in bonding parts together.

The adhesive compositions may have, when cured, one or more or all of the following mechanical properties:
The adhesives may have, when cured, a cohesive strength, as measured by overlap shear of at least 20 MPa.
The adhesives may have a crash resistance, as measured by dynamic wedge impact (DWI) of at least 13 J, preferably at least 15 J, more preferably at least 18 J, most preferably at least 20 J.
The adhesives may have, when cured, good or improved ageing resistance.
Adhesive compositions suitable as structural adhesives may have, when cured, an adhesive strength, as measured by T-peel tests of more than 150 N/25mm, preferably more than 160 N/25mm, most preferably more than 180 N/25mm.

Also provided are structural adhesive compositions based on epoxy resins that reach a cohesive strength, as measured by overlap shear, of at least 1 MPa, preferably of at least 2 MPa when cured for a period of 40 seconds at a temperature of about 120°C or preferably at a temperature of at least about 140°C and more preferably in a temperature range from about 120 to about 180°C or from room temperature up to 180°C.

Unless stated otherwise, all measurements and values refer to room temperature (20°C). Unless stated otherwise all values are average values taken from three measurements. Unless stated otherwise the relative humidity was 50% +/- 5%.

### Epoxy resins:

Epoxides that are useful in the composition of the present invention are of the glycidyl ether type. Useful epoxides may include those having the general formula (I): 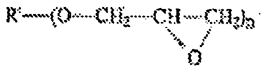 wherein
R' is alkyl, alkyl ether, or aryl;
n is greater than 1 or in the range from 1 to 4.

Preferred epoxides include glycidyl ethers of Bisphenol A and F, aliphatic or cycloaliphatic diols. Useful materials include those having a molecular weight in the range of from about 170 to about 10,000, preferably from about 200 to about 3,000 g/mol. Useful materials can include linear polymeric epoxides having terminal epoxy groups (e.g., a diglycidyl ether of polyoxyalkylene glycol).

Preferred materials are aromatic glycidyl ethers, such as those prepared by reacting a dihydric phenol with an excess of epichlorohydrin. Examples of useful dihydric phenols include resorcinol, catechol, hydroquinone, and the polynuclear phenols including p,p'-dihydroxydibenzyl, p,p'-dihydroxyphenylsulfone, p,p'-dihydroxybenzophenone, 2,2'-dihydroxyphenyl sulfone, p,p'-dihydroxybenzophenone, 2,2-dihydroxy-1,1-dinaphrhylmethane, and the 2,2', 2,3', 2,4', 3,3', 3,4', and 4,4' isomers of dihydroxydiphenylmethane, dihydroxydiphenyldimethylmethane, dihydroxydiphenylethylmethylmethane, dihydroxydiphenylmethylpropylmethane, dihydroxydiphenylethylphenylmethane, dihydroxydiphenylpropylenphenylmethane, dihydroxydiphenylbutylphenylmethane, dihydroxydiphenyltolylethane, dihydroxydiphenyltolylmethylmethane, dihydroxydiphenyldicyclohexylmethane, and dihydroxydiphenylcyclohexane.

Examples of commercially available aromatic and aliphatic epoxides useful in the invention include diglycidylether of bisphenol A (e.g. available under the tradename EPON 828, EPON 1001, EPON 1310 and EPON 1510 from Hexion Speciality Chemicals GmbH, Rosbach, Germany), DER-331, DER-332, and DER-334 available from Dow Chemical Co,); diglycidyl ether of bisphenol F (e.g. EPICLON 830) available from Dainippon Ink and Chemicals, Inc.); silicone resins containing diglycidyl epoxy functionality; flame retardant epoxy resins (e.g. DER 580, a brominated bisphenol type epoxy resin available from Dow Chemical Co.); 1,4-dimethanol cyclohexyl diglycidyl ether and 1,4-butanediol diglycidyl ether. Other epoxy resins based on bisphenols are commercially available under the tradenames D.E.N., EPALLOY and EPILOX.

The compositions may comprise from 20 to 90%, preferably from 30 to 60% by weight based on the total composition of epoxy resin. In the following, by total weight of the composition is meant the total weight of the composition if the composition is a one-part composition or, in case of a two-part composition, the total weight is the combined weight of the separate parts.

### Acetoacetoxy-functionalized compounds:

The addition of acetoacetoxy-functionalized compounds to epoxy resins containing toughening agents has been found to increase the toughness of the cured composition such that the same toughening effect can be achieved with a lower level of toughening agents.

The acetoacetoxy-functionalized compounds are compounds containing at least one acetoacetoxy group, preferably in a terminal position. Such compounds include acetocetoxy group(s) bearing hydrocarbons, such as alkyls, polyether, polyols, polyester, polyhydroxy polyester or polyoxy polyols or combinations thereof.

The compound is preferably a polymer. Acetoacetoxy-functionalized compounds suitable in the invention have a molecular weight of from about 100 g/mol to about 10,000 g/mol, preferably from about 200 g/mol to about 1,000 g/mol, more preferably from about 150 g/mol to less than 4,000 g/mol or less than 3,000 g/mol. Suitable compounds include those having the general formula (II) 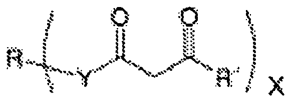 wherein
X is an integer from 1 to 10, preferably from 1 to 3;
Y represents O, S or NH; preferably Y is O;
R represents a residue selected from the group of residues consisting of polyhydroxy alkyl, polyhydroxy aryl or a polyhydroxy alkylaryl, polyoxy alkyl, polyoxy aryl and polyoxy alkylaryl; polyoxy polyhydroxy alkyl, -aryl, -alkylaryl, or polyhydroxy polyester alkyl,- aryl or -alkylaryl, wherein R is linked to Y via a carbon atom, and wherein, if X is other than 1, R is linked to Y via the number of carbon atoms corresponding to X. Preferably R represents a polyether polyhydroxy alkyl, -aryl or - alkylaryl residue, or a polyester polyhydroxy alkyl, - aryl or - alkylaryl residue.

The residue R may, for example, contain from 2 to 20 or from 2 to 10 carbon atoms. The residue R may, for example, also contain from 2 to 20 or from 2 to 10 oxygen atoms. The residue R may be linear or branched.

Examples of polyesterpolyol residues include polyesterpolyols obtainable from condensation reactions of a polybasic carboxylic acid or anhydrides and a stoichiometric excess of a polyhydric alcohol, or obtainable from condensation reactions from a mixture of polybasic acids, monobasic acids and polyhydric alcohols. Examples of polybasic carboxylic acids, monobasic carboxylic acids or anhydrides include those having from 2 to 18 carbon atoms, preferably those having from 2 to 10 carbon atoms.

Examples of polybasic carboxylic acids or anhydrides include adipic acid, glutaric acid, succinic acid, malonic acid, pimleic acid, sebacic acid, suberic acid, azelaic acid, cyclohexane-dicarboxylic acid, phthalic acid, isophthalic acid, terephthalic acid, hydrophthalic acid (e.g. tetrahydro or hexadehydrophthalic acid) and the corresponding anhydrides and including combinations thereof.

Examples of monobasic carboxylic acids include formic acid, acetic acid, propionic acid, butyric acid, valeric acid, caproic acid, caprylic acid, capric acid, lauric acid, myristic acid, palmitic acid, stearic acid and the like, as well as combinations thereof.

Polyhydric alcohols include those having from 2 to 18, preferably 2 to 10 carbon atoms.

Examples of polyhydric alcohols include ethylene glycol, propylene glycol, butylene glycol, hexylene glycol, pentaerythriol, glycerol and the like including polymers thereof.

Examples of polyetherpolyol residues include those derived from polyalkylene oxides. Typically, the polyalkylene oxides contain alkylene groups from about 2 to about 8 carbon atoms, and preferably from about 2 to about 4 carbon atoms. The alkylene groups may be linear or branched but are preferably linear. Examples of polyetherpolyol residues include polyethylene oxide polyol residues, polypropylene oxide polyol residues, polytetramethylene oxide polyol residues, and the like.

R' represents a C₁-C₁₂ linear or branched or cyclic alkyl such as methyl, ethyl, propyl, butyl, sec-butyl, tert-butyl etc.

The acetoacetoxy-functionalized oligomers can be prepared by acetacetylation of polyhydroxy compounds with alkyl acetoacetates, diketene or other acetoacetylating compounds as, for example, described in EP 0 847 420 B1.

Other polyhydroxy compounds may be a copolymer of acrylates and/or methacrylates and one or more unsaturated monomer containing a hydroxyl group. Further examples of polyhydroxy polymers include hydroxyl-terminated copolymers of butadiene and acrylonitrile, hydroxy-terminated organopolysiloxanes, polytetrahydrofuran polyols, polycarbonate polyols or caprolactone based polyols.

Acetoacetoxy-functionalized polymers are commercially available, for example, as K-FLEX XM-B301 from Worlee-Chemie GmbH, Lauenburg, Germany.

The composition may comprise from about 0.1 to less than about 15% or from about 0.5 to about 8% by weight based on the weight of the total composition of the acetoacetoxy-functionalized compound.

### Toughening agents:

Toughening agents are polymers, other than the epoxy resins or the acetoacetoxy-funcitionalized compounds, capable of increasing the toughness of cured epoxy resins. The toughness can be measured by the peel strength of the cured compositions. Typical toughening agents include core/shell polymers, butadiene-nitrile rubbers, acrylic polymers and copolymers etc. Preferred toughening agents are core/shell polymers.

### Core/shell polymers:

A typical toughening agent suitable in the invention is a core/shell polymer. A core/shell polymer is understood to mean a graft polymer having a core comprising a graftable elastomer, which means an elastomer on which the shell can be grafted. The elastomer may have a glass transition temperature lower than 0°C. Typically the core comprises or consists of a polymer selected from the group consisting of a butadiene polymer or copolymer, an acrylonitril polymer or copolymer, an acrylate polymer or copolymer or combinations thereof. The polymers or copolymers may be cross-linked or not cross-linked. Preferably, the core polymers are cross-linked.

On to the core there is grafted one or more polymers, the "shell". The shell polymer typically has a high glass transition temperature, i.e. a glass transition temperature greater than 26°C. The glass transition temperature may be determined by dynamic mechanical thermo analysis (DMTA) ("Polymer Chemistry, The Basic Concepts, Paul C. Hiemenz, Marcel Dekker 1984).

The "shell" polymer may be selected from the group consisting of a styrene polymer or copolymer, a methacrylate polymer or copolymer, an acrylonitrile polymer or copolymer, or combinations thereof. The thus created "shell" may be further functionalized with epoxy groups or acid groups. Functionalization of the "shell" may be achieved, for example, by copolymerization with glycidylmethacrylate or acrylic acid. In particular, the shell may comprise acetoacetoxy moieties in which case the amount of acetoacetoxy-functionalized polymer may be reduced, or it may be completely replaced by the acetoacetoxy-functionalized core/shell polymer.

Typical core/shell polymers that may be used are core/shell polymers comprising a polyacrylate shell, such as for example a polymethylmethacrylate shell. The polyacrylate shell, such as the polymethylmethacrylate shell may not be cross-linked.

Typically, the core/shell polymer that may be used comprises or consists of a butadiene polymer core or a butadiene copolymer core, such as for example a butadiene-styrene copolymer core.

The butadiene or butadiene copolymer core such as the butadiene-styrene core may be cross-linked.

The core/shell polymer according to the invention may have a particle size from about 10 to 1,000 nm, preferably from 150 to 500 nm.

The core/shell polymer may be used in the total composition in an amount of from about 5 to less than about 55% by weight of the total composition, preferably from about 10 to about 30%.

The weight ratio of core/shell polymer to acetoacetoxy-functionalized polymer may be from about 1 : 1 to about 20 : 1 or from about 1: 1 to about 6 : 1.

Suitable core/shell polymers and their preparation are for example described in US 4,778,851. A commercially available core/shell polymer that may be used in the invention is, for example, PARALOID EXL 2600 from Rohm & Haas Company, Philadelphia, USA, KANE ACE MX120 from Kaneka, Belgium.

### Curine Agents:

Curing agents suitable in the present invention are compounds which are capable of cross-linking the epoxy resin. Typically these agents are primary or secondary amines, with primary amines being preferred. The amines may be aliphatic, cycloaliphatic, aromatic, or aromatic structures having one or more amino moiety. Examples for the curing agent according to the invention include those amines having the general formula (III): 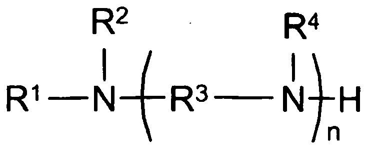 wherein
the residues R¹, R², and R⁴, independently from each other, may represent hydrogen or a hydrocarbon containing about 1 to 15 carbon atoms, wherein the hydrocarbons include polyethers, preferably, R³ represents a hydrocarbon containing about 1 to 15 carbon atoms wherein the hydrocarbons include polyethers, preferably R³ is a polyetheralkyl residue, and preferably, the residues are chosen such that the amine is a primary amine;
n is from 1 to 10.

Examples for suitable curing agents include ethylene diamine, diethylene diamine, triethylene tetramine, propylene diamine, tetraethylene pentamine, hexaethylene heptamine, hexamethylene diamine, 2-methyl-1,5-pentamethylene-diamine, and the like.

Preferably, the curing agent is a polyether amine having one or more amine moiety, including those polyether amines that can be derived from polypropylene oxide or polyethylene oxide. Suitable polyether amines that can be used are available from HUNTSMAN under the trade name JEFFAMINE. Most preferred curing agent is 4,7,10-trioxatridecane-1,13-diamine (TTD). TTD is commercially available, for example from BASF or Nitroil.

The compositions may contain from about 3 to about 30% wt, preferably from about 7 to about 15% wt, based on the total weight of the composition, of curing agent.

The molar ratio of epoxide moieties to primary or secondary amine moieties can be adjusted to achieve optimum performance through routine experimentation. For example, the ratio may be preferably from about 5 : 1 to about 1 : 5, or from about 1 : 1 to about 1 : 3.

### Secondary Curatives:

In some embodiments, the composition may also comprise a secondary curative. Secondary curatives according to the invention include imidazoles, imidazole-salts, imidazolines or aromatic tertiary amines including those having the structure of formula (IV): 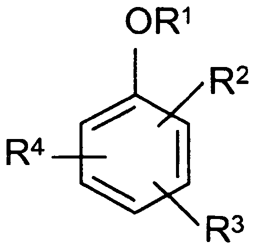 wherein
R¹ is H or alkyl, such as, e.g., methyl or ethyl, preferably methyl;
R² is CHNR⁵R⁶;
R³ and R⁴ may be, independently from each other, present or absent and when present R³ and R⁴ are CHNR⁵R⁶;
R⁵ and R⁶ are, independent from each other, alkyl, preferably CH₃ or CH₂CH₃;

An example for a secondary curative is tris-2,4,6-(dimethylaminomethyl)phenol commercially available as ANCAMINE K54 from Air Products Chemicals Europe B.V.

### Metal salt catalysts:

In further embodiments there are provided compositions that comprise in addition to the curing catalyst a metal salt catalyst. Suitable catalysts which are operable in the present compositions include the group I metal, group II metal or lanthanoid salts wherein the anion is selected from nitrates, iodides, thiocyanates, triflates, alkoxides, perchlorates and sulfonates with the nitrates, iodides, thiocyanates, triflates and sulfonates including their hydrates being preferred.

The preferred group I metal (cation) is lithium and the preferred group II metals are calcium and magnesium with calcium being especially preferred.

Accordingly, preferred catalyst salts are lanthane nitrate, lanthane triflate, lithium iodide, lithium nitrate, calcium nitrate and their corresponding hydrates. Excellent results are obtained with calcium nitrate.

In general, a catalytic amount of salt is employed. For most applications, the catalyst will be used from about 0.05 to less than 3.0 parts by weight based on the total weight of the total composition. Typically, a weight ratio of metal salt catalyst to secondary curing agent of from about 1 : I to about 3 : 1 may be employed.

### Other ingredients:

The compositions may further comprise adjuvants such reactive diluents, pigments and fillers.

Reactive diluents may be added to control the flow characteristics of the adhesive composition. Suitable diluents can have at least one reactive terminal end portion and, preferably, a saturated or unsaturated cyclic backbone. Preferred reactive terminal ether portions include glycidyl ether. Examples of suitable diluents include the diglycidyl ether of resorcinol, diglycidyl ether of cyclohexane dimethanol, diglycidyl ether of neopentyl glycol, triglycidyl ether of trimethylolpropane. Commercially available reactive diluents are for example "Reactive Diluent 107" from Hexion or Epodil 757 from Air Products and Chemical Inc, Allentown, PA, USA.

Fillers may include adhesion promoters, corrosion inhibitors and rheology controlling agents. Fillers may include silica-gels, Ca-silicates, phosphates, molybdates, fumed silica, clays such as bentonite or wollastonite, organo-clays, aluminium-trihydrates, hollow-glass-microspheres; hollow-polymeric microspheres and calcium-carbonate. Commercially available fillers are, for example:
SILANE Z-6040 (DOW-Corning, Seneffe, Belgium): glycidoxypropyltrimethoxysilane; SHIELDEX AC5 (Grace Davison, Columbia, MD / USA), a synthetic amorphous silica, calcium hydroxide mixture; CAB-O-SIL TS 720 (Cabot GmbH, Hanau, Germany): hydrophobic fumed silica-treated with polydimethyl-siloxane-polymer; glass-beads class IV (250-300 microns) : Micro-billes de verre 180/300 (CVP S.A., France) ; glass bubbles K37 (3M Deutschland GmbH, Neuss, Germany) : amorphous silica ; MINSIL SF 20 (Minco Inc., 510 Midway, Tennessee, USA) : amorphous, fused silica ; APYRAL 24 ESF (Nabaltec GmbH, Schwandorf, Germany), epoxysilane-functionalized (2 wt %) aluminium trihydrate, TIONA 568.

Pigments may include inorganic or organic pigments including ferric oxide, brick dust, carbon black, titanium oxide and the like.

### Adhesive compositions:

The adhesive compositions preferably do not contain organic or aqueous solvents. Solvents as referred to herein are liquids that do not react with the ingredients of the compositions and can be removed from the composition. Typically, solvents are liquids having a boiling point at ambient conditions of less than 150°C, preferably less than 130°C. The adhesive composition is preferably a solvent-free composition, such as a 100% solids composition.

The adhesive composition is heat curable and/or curable at room temperature.

The adhesive compositions according to the invention may be a one-part or a two-part composition, with two-part compositions being preferred. In case of two-part compositions, the adhesive is prepared by mixing the two parts together. The mixing is preferably carried out prior to immediate use. It is possible to first mix the components together and to allow for curing at room temperature prior to heat curing.

Two part compositions have various advantages, such as for example a longer shelf-life.

Two-part compositions according to the invention comprise a part A and separate therefrom a part B. Further separate parts containing further ingredients of the adhesive compositions are also contemplated. The part B may comprise the epoxy resin and the acetoacetoxy-functionalized compounds or polymers. Part A, or part B, or part A and part B, preferably part B comprises the core/shell polymer.

Part A comprises the curing agent.

Part A or/and part B, preferably part A, may also comprise the secondary curative.

Part A or/and part B, preferably part A, may also comprise the metal catalyst.

Part A or/and part B may also comprise the other ingredients described herein.

In embodiments, were the adhesive composition is a two-part composition the weight percentages of the ingredients described herein refer to the total weight of the final adhesive composition, i.e. the individual parts combined. In case of a two part composition comprising a part A and a part B, the final adhesive composition to which the weight percentages refer is the composition combined of A and B.

### Curing:

### Partial Curing:

In some embodiments according to the invention, the composition may reach a cohesive strength of at least 1 MPa. after short heat curing periods. Since the cohesive strength can still increase when curing the composition at the same conditions for longer periods, this kind of curing is referred to herein as partial curing. Typically, a cohesive strength of at least 1 MPa can be achieved by curing the composition at a temperature of at least 120°C for at least 40 seconds but less than 3 minutes. Preferably, the composition has a cohesive strength measured on steel of at least about 1 MPa after curing at 120 °C for at least 40 seconds and less than 3 minutes or at least about 2 MPa after curing at a temperature of 130°C for at least 40 seconds and less than 3 minutes. Preferably, the composition has a cohesive strength of at least about I MPa after curing at 120 °C for 40 seconds or a cohesive strength of at least about 2 MPa after curing at 120°C for 60 seconds. In principle partial curing can be carried out by any kind of heating. Preferably, induction curing is used for partial curing. Induction curing is a non-contact method of heating using electric power to generate heat in conducting materials by placing an inductor coil through which an alternating current is passed in proximity to the material. The alternating current in the work coil sets up an electromagnetic field that creates a circulating current in the work piece. This circulating current in the work piece flows against the resistivity of the material and generates heat. Induction curing equipment can be commercially obtained, for example, EWS from IFF-GmbH, Ismaning, Germany.

### Complete Curing:

Complete curing is achieved when the cohesive strength and/or adhesive strength does no longer increase when continuing heat-curing the sample at the same conditions. Complete curing can be achieved by heating the mixture at the appropriate temperature for the appropriate length of time. Full (complete) cure is typically brought about by heating the adhesive composition (in case of a two component composition obtained after mixing the components) to a temperature in the range of from about 80 to about 220°C. Typically the heating is carried out, depending on the curing temperature, for at least 15 minutes, at least 30 minutes, at least 2 hours, at least 8 hours or at least 12 hours.

### Uses of the adhesive compositions:

The present adhesive compositions may be used to supplement or completely eliminate a weld or mechanical fastener by applying the adhesive composition between two parts to be joined and curing the adhesive to form a bonded joint. At least one of these parts or both parts may be of metal such as steel, iron, copper, aluminum etc. including alloys thereof, or a carbon fiber, a glass fiber or glass or a plastic such as, for example, polyethylene, polypropylene, polycarbonate, polyester, polyamide, polyimide, polyacrylate, or polyoxymethylene or mixtures thereof. Preferably at least, more preferably both parts are metal.

In areas of adhesive bonding, the adhesive can be applied as liquid, paste, and semi-solid or solid that can be liquefied upon heating, or the adhesive may be applied as a spray. It can be applied as a continuous bead, in intermediate dots, stripes, diagonals or any other geometrical form that will conform to forming a useful bond. Preferably, the adhesive composition is in a liquid or paste form.

The adhesive placement options.may be augmented by welding or mechanical fastening.

The welding can occur as spot welds, as continuous seam welds, or as any other welding technology that can cooperate with the adhesive composition to form a mechanically sound joint.

The composition according to the invention may be used as structural adhesives. In particular, it may be used as structural adhesive in vehicle assembly, such as the assembly of watercraft vehicles, aircraft vehicles or motorcraft vehicles, such as cars, motor bikes or bicycles. In particular the adhesive compositions may be used as hem-flange adhesive. The adhesive may also be used in body frame construction. The compositions may also be used as structural adhesives in architecture or as structural adhesive in household and industrial appliances.

The composition according to the invention may also be used as welding additive. The composition may be used as a metal - metal adhesive, metal - carbon fiber adhesive, carbon fiber - carbon fiber adhesive, metal-glass adhesive, carbon fiber - glass adhesive.

The following examples and data further exemplify the invention but are not meant to limit the invention in any form.

### Materials employed:

D.E.N. 431 (Dow Deutschland GmbH, Schwalbach, Germany): epoxy novolac resin with a medium epoxy functionality of 2.8.

EPON 828 (Hexion Speciality Chemicals GmbH, Rosbach, Germany): epoxy resin based on diglycidylether of bisphenol-A, MW < 700 g/mol.

PARALOID EXL 2600 (Rohm and Haas Company, Philadelphia, PA/USA):
Methacrylate/butadiene/styrene polymer with core/shell architecture (core: cross-linked rubber comprising polybutadiene-co-polystyrene-copolymer; shell: polymethacrylate); Particle size: ca. 250 nm.

K-FLEX XM-B301 (Worlee-Chemie GmbH, Lauenburg, Germany):
Acetoacetoxy functionalized polyester polyol.

EPODIL 757 (Air Products and Chemicals Inc., Allentown, PA / USA):
1,4-Cyclohexandimethanoldiglycidylether.

TTD (BASF, Ludwigshafen, Germany): 4,7,10-Trioxa-1,13-tridecane-diamine.

ANCAMINE K54 (Air Products and Chemicals, Inc., Allentown/PA/USA: technical grade Tris-2,4,6-dimethylaminomethyl-phenol.

Calciumnitrate-tetrahydrate: (VWR International GmbH, Darmstadt, Germany) Ca(NO₃)₂ x 4H₂O.

KANE ACE MX120 (Kaneka, Belgium): core/shell polymer (25%wt) dispersed in epoxy resin (diglycidylether of bisphenol A). The core/shell material is based on a cross-linked polystyrene-co-polybutadiene-core and polymethylmethacrylate shell. The particle size is less than 100 nm.

EPIKOTE 6049 (Hexion Speciality Chemicals GmbH, Rosbach, Germany): epoxy resin based on bisphenol-F containing a butadiene-ethylene-styrene copolymer.

EPON 1009 (Hexion Speciality Chemicals GmbH, Rosbach, Germany): oligomer made from EPON 828 and bis-phenol A having an approximate equivalent weight of 3200.

DER 331 (Dow Chemical Company): digylcidyl ether of bisphenol A having an approximate epoxy equivalent weight of 187.5.

CAB-O-SIL TS 720 (Cabot GmbH, Hanau, Germany), hydrophobic fumed silica - treated with poldimethyl-siloxane polmer.

SHIELDEX ACS (Grace Davison, Columbia, MD, USA), synthetic amorphous silica calcium hydroxide mixture.

Glass bead class IV (CVP SA, France)

APYRAL 24 ESF (Nabaltec GmbH Schwandorf, Germany), expoxysilane-functionalized (2wt.%) aluminum tri hydrate.

### Test Methods and Examples:

### 1. Cohesive Strength (Overlap Shear Strength)

### 1.1. Cohesive strength method 1

Overlap shear strength was determined according to DIN EN 1465 using a tensile tester at a crosshead speed of 10 mm/min. The test-results were reported in MPa. The cohesive strength was measured on non-treated steel substrates.

Equipment: Zwick/Roell Z050 tensile-tester (Zwick GmbH & Co. KG, Ulm, Germany)

Substrate: 100 x 25 x 2 mm strips of non-treated steel (DC04 from Thyssen Krupp).

Preparation of Test Assembly: The adhesive is applied on one end of a test strip using a spatula followed by overlapping the ends of the treated strip with the end of the non-treated strip. The two ends were pressed against each other forming an overlap of 13 mm. Excess adhesive was then removed using a spatula. The overlapped strips were clamped at the adhesive ends using capacity binder clips. The clamped assembly was partially or completely cured prior to being submitted to the overlap shear test according to DIN EN 1465.

### 1.2. Cohesive strength method 2

Lap shear specimens were made using 4" x 7" x 0.063" 2024-T3 bare aluminum that had been anodized according to Boeing Aircraft Company Specification BAC-5555 with the exception that the anodization voltage was 12.5 volts. The specimen was generated as described in ASTM Specification D-1002. A strip of approximately ½" x 10 mils of adhesive was applied to one edge of each of the two adherends using a scraper. Three 5 mil diameter piano wires were used as spacers for bondline thickness control. The bond was closed and taped on the edge. The bond was placed between sheets of aluminum foil and pieces of cardboard. Two 14# steel plates were used to apply pressure to provide for adhesive spreading. After the adhesive had been allowed to cure (as described in the examples), the larger specimen was cut into 1" wide samples, providing a ½ square inch bonded area. Six lap shear samples were obtained from each larger specimen. The bonds were tested to failure at room temperature on a Sintech Tensile Testing machine using a crosshead displacement rate of 0.1"/min. The failure load was recorded. The lap width was measured with a vernier caliper. The quoted lap shear strengths are calculated as (2 x failure load)/measured width. The average and standard deviation were calculated from the results of six tests.

### 2. Adhesive Strength (T-peel Strength)

### 2.1. T-peel method 1

Adhesive strength was measured on zinc-electrogalvanized steel substrates. The-T-Peel strength was determined according to DIN EN 1464 using a Zwick/Roell Z050 tensile-tester (Zwick GmbH & Co. KG, Ulm, Germany) operating at a crosshead speed of 100 mm/min. The test results are reported in N/25mm.

150 x 25 x 0.78 mm zinc-electrogaivanized steel strips (DC04 + ZE75/75 from Thyssen Krupp, Germany) were cleaned by immersion in 1:1 n-heptane and methyl-ethylketone followed by wiping with a tissue saturated with n-heptane. The strips were masked with a Teflon tape (PTFE Tape 3M 5490) leaving a blank area of 100 mm x 25mm in order avoid flow of the adhesive over the extended area during assembly of the strips. This guarantees a defined bondline resulting in a well defined crack during the measurement. The test adhesive is applied on the blank area of one strip using a spatula followed by covering the area to which the adhesive was applied with the second strip. The strips were pressed against each other and residual adhesive was removed with a spatula. The assembly was clamped on both sides using capacity binder clips over the length of the bondline.

The clamped assembly was partially or completely cured (see below) prior to being submitted to the T-Peel test according to DIN EN 1464.

### 2.2. T-peel method 2

T-peel specimens were made using 3" x 8" x 0.025" 2024-T3 bare aluminum that had been anodized as described above. The specimen was generated as described in ASTM D-1876. A strip of approximately 2" x 5" x 10 mil of adhesive was applied to both of the two adherends. 10 mil thick spacers made from brass shims were applied to the edges of the bonded area for bondline thickness control. The bond was closed and adhesive tape was applied to hold the adherends together during the cure. The adhesive bonds were placed between sheets of aluminum foil and also between pieces of cardboard. Four 14# steel plates were used to apply pressure to provide for adhesive spreading. [In those cases in which the adhesive was too viscous, the T-peel specimens were placed in a hydraulic press in order to provide more force for spreading.] After the adhesive had been allowed to cure (as described in the examples), the larger specimen was cut into 1" wide samples, yielding two 1" wide specimens. The bonds were tested to failure at room temperature on a Sintech Tensile Testing machine using a crosshead displacement rate of 12"/min. The initial part of the loading data is ignored. The average load is measured after about 1" is peeled. The quoted T-peel strength is the average of two peel measurements.

### 3. Crash Resistance (Resistance to Impact of Dynamic Loads / Dynamic weight impact, DWI)

This test is used to evaluate the relative ability of an adhesive bonding system to dissipate energy in the peel mode during an impact load. The method is an extension to ISO Method 11343.

Equipment: Dynatup™ Impact test Machine, Model 9200-series (Instron Corp., Norwood, MA, USA). The impact hammer is a force transducer classified as drop weight ("tup").

### Coupon preparation:

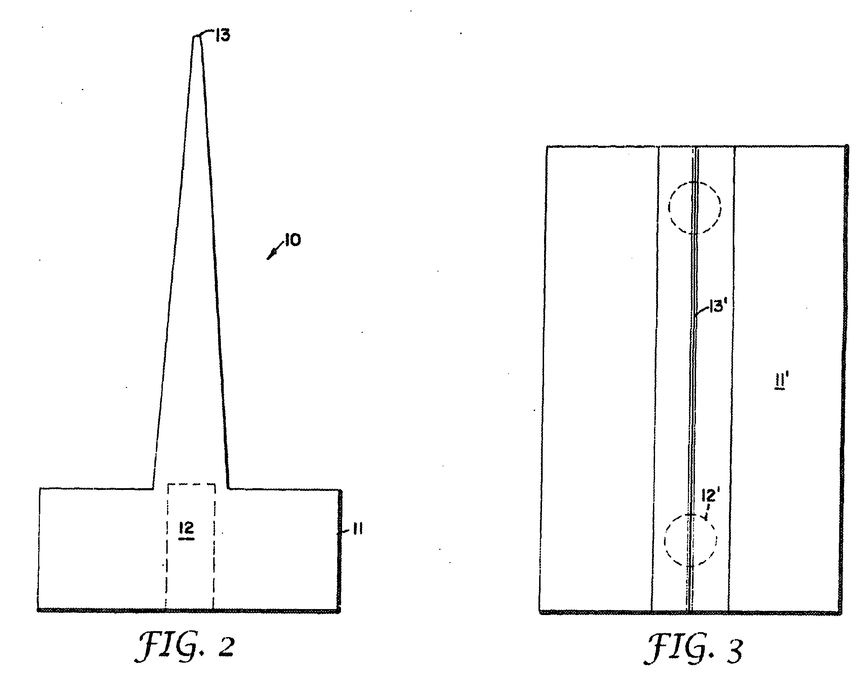

Steel coupons (100 x 20 x 0.78mm, electrogalvanized DC04+ZE 75/75 from Thyssen Krupp) were cleaned by immersion in 1:1 n-heptane and methylethylketone solution followed by wiping the coupons with a tissue that has been saturated with n-heptane. Then PTFE adhesive tape (available from 3M as Tape # 5490) was applied to the coupons at a distance of 30 mm from the edge to ensure a reproducible bonding area of 30 mm x 20 mm. The coupons were then bent to an angle of 4.5° (figure 2).

### Preparation of adhesives:

Part A and B were mixed together using a DAC 150 FVZ Speedmixer (Hauschild Engineering, Germany) at 3000 rpm for 1 min.

### Preparation of the Test Assembly:

The adhesive was applied to the blank area (the 30 mm zone in figure 2) of one coupon using a spatula. This coupons was pressed together with another coupon in such a way to form a Y-shaped sample. Excess adhesive (i.e. any adhesive outside the 30 mm area) was removed using a spatula. The assembled coupons were clamped together using capacity binder clips over the length of the adhesive bondline. The test assembly was then completely cured (see completely curing above). Any excess adhesive (i.e. any adhesive outside the 30 mm area) was cut off with a knife.

### Impact Test:

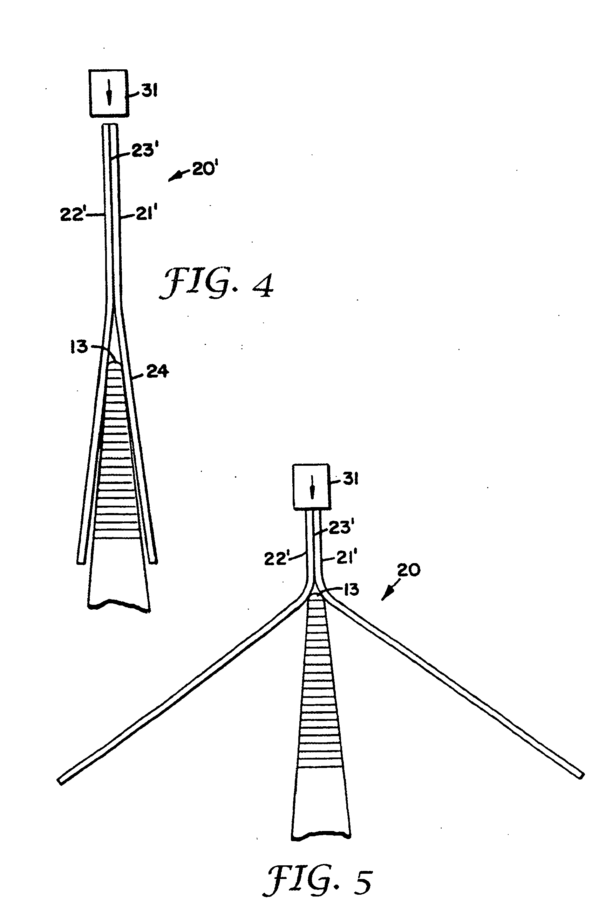

The impact test is shown on figures 5 and 6. First the Y-shaped test assembly (i.e. the assembled coupons (21,22) was placed onto the wedge (13) in the way shown in figure 5. Then a 21 kg weight (31) was dropped with a falling speed of 3m/s onto the test assembly, which drove the wedge into the bond-line of the adhesive (23) as shown in figure 6. The kinetic energy absorbed by the sample during the impact is expressed as fracture energy in Joule.

### 4. Environmental fatigue test:

In this test method the adhesive is applied to coupons as described in the cohesive strength method above except that the metal coupons were made from dry tube aluminium (available under the trade name 5754PT2AL070 from Rocholl GmbH, Schoenbrunn, Germany). The samples were allowed to cure for 24 h at room-temperature followed by cure cycle for 30 min at 90°C, 120 °C and 170°C in a ventilated oven. The sample was then allowed to equilibrate to room-temperature. Each of the 13 mm overlap shear joints were transferred into a the test chamber where an ultimate tensile force of 700 N was applied to each of the strips at both ends with a frequency of 10Hz at a constant temperature of 50°C and a relative humidity of 100%. The number of cycles the assembled test strip survived, i.e. until the bonding fails, is measured.

### 5. Synthesis of acetoacetoxy-functionalized compounds

Two reactions were used to generate acetoacetonate-functionalized materials. One of these is the reaction of diketene with hydroxyl functional materials as described in R. J. Clemens, Chem Rev.,86, 241 (1986). The other is a transesterification reaction using t-butyl acetoacetonate as described in J. W. Witzeman and W. D. Nottingham, J. Org. Chem., 56, 1713 (1991).

### 5.1. AcAc-1 The acetoacetate diester of poly(propylene glycol)[1000 MW]

50 g of 1000 MW poly(propylene glycol) was weighed into a 3 neck round bottom flask. 31.64 g of t-butyl acetoacetonate as well as 50 g of toluene was added to the flask, which was equipped with a stirrer as well as a nitrogen purge. The flask was heated to 110°C by means of an oil bath for about 8 hours. A mechanical vacuum pump was applied to complete the distillation for about ½ hour. An NMR spectrum of the material was obtained and it was confirmed that the material was the diacetoacetonate ester of poly(propylene glycol.)

### 5.2. AcAc-1-1 Alternate synthesis of the acetoacetate ester diester of poly(propylene glycol) [1000 MW]

A 500-mL round bottom flask was charged with 100.0 g of poly(propylene glycol) (MW = 1000, 200 mmol of hydroxyl) and 104.1 g (800 mmol) of ethyl acetoacetate. A stillhead was attached, and the reaction mixture was heated at 100 °C for 48 h. Analysis of an aliquot by is and ¹³C NMR indicated approximately 50 % conversion. Heating was continued for another 3 days, and NMR analysis of an aliquot indicated little change from before. An additional 100.0 g of ethyl acetoacetate was added, and after continued heating at 100 °C for 3 days, NMR analysis of an aliquot indicated approximately 63 % conversion. The reaction mixture was heated to 180 °C for 40 min and a small amount of distillate was collected. A slight vacuum was applied, and approximately 40 mL of distillate was obtained. NMR analysis now indicated essentially complete reaction. All aliquots were returned to the reaction mixture along with an additional 50.0 g of ethyl acetoacetate, and the mixture was heated at 180 °C for I h. Partial vacuum was applied, and excess ethyl acetoacetate was distilled from the mixture. A few g of decolorizing carbon was added, the mixture was filtered after standing overnight, and remaining volatiles were separated using a Kugelrohr apparatus (0.04 mm, 150 °C). The final product was obtained as a clear, light yellow liquid, 83.3 g. The ¹H and ¹³C NMR spectra of the product were consistent with the structure of the desired compound.

### 5.3. AcAc-3 The acetoacetate diester of poly(ethylene glycol)[1000 MW]

50 g of 1000 MW poly(ethylene glycol) was weighed into a 3 neck round bottom flask. 31.63 g of t-butyl acetoacetonate was added to the flask, which was equipped with a stirrer as well as a nitrogen purge. The flask was heated to 110°C by means of an oil bath for about 8 hours. A mechanical vacuum pump was applied to complete the distillation. An NMR spectrum of the material was obtained and it was confirmed that the material was the diacetoacetonate ester of poly(ethylene glycol.)

### 5.4. AcAc-4 The acetoacetate diester of poly(butadiene)diol[1200 MW]

49.61 g of 1200 MW poly(butadiene)diol was weighed into a 3 neck round bottom flask. 14 g of t-butyl acetoacetonate as well as 50 g of toluene was added to the flask, which was equipped with a stirrer as well as a nitrogen purge. The flask was heated to 110°C by means of an oil bath for about 8 hours. A mechanical vacuum pump was applied to complete the distillation for about ½ hour. An NMR spectrum of the material was obtained and it was confirmed that the material was the diacetoacetonate ester of poly(butadiene)diol.

### 5.5. AcAc-5 The acetoacetate diester of poly(caprolactone)diol [1250 MW]

A Dcan-Stark azeotropic distillation apparatus was set up. 50.39 g of poly(caprolactone)diol (nominally 1250 MW) was weighed into a 3-neck round bottom flask along with 100 mL of toluene. The flask was heated to about 140°C and about 20 mL of hazy liquid was collected. The temperature was lowered to 50°C and 6.4 mL of diketene was added by means of a syringe. The reaction was allowed to proceed for about 2 hours after which 0.1 mL of pyridine was added. The reaction was allowed to proceed overnight. The next morning, the volatiles were stripped using a mechanical vacuum pump. An NMR spectrum of the material was obtained and it was confirmed that the material was the diacetoacetonate ester of poly(caprolactone)diol.

### 5.6. AcAc-6 The acetoacetate diester of poly(caprolactone triol) [300 MW]

A Dean-Stark azeotropic distillation apparatus was set up. 50 g of poly(caprolactone)triol (nominally 300 MW) was weighed into a 3-neck round bottom flask along with 100 mL of toluene. The flask was heated to about 140°C and about 20 mL of hazy liquid was collected. 0.1 mL of pyridine was added. The temperature was lowered to 50°C and 38.6 mL of diketene was added by means of a syringe. The reaction was allowed to proceed overnight. The next morning, the volatiles were stripped using a mechanical vacuum pump. An NMR spectrum of the material was obtained and it was confirmed that the material was the diacetoacetonate ester of poly(caprolactone)triol.

### 5.7. AcAc-7 The acetoacetate triester of 1,1,1-Tris(hydroxymethyl)propane

A 250-mL round bottom flask was charged with 11.88 g (88.5 mmol) of 1,1,1-tris(hydroxymethyl)propane, 42.75 g (270.0 mmol) of tert-butyl acetoacetate and 25 mL of o-xylene. A 6-inch vigreaux column topped with a stillhead was attached, and the reaction mixture was heated to reflux. Distillation of *tert*-butyl alcohol occurred at a bath temperature of 120 °C (bp 80-87 °C), and the bath temperature was gradually raised to 150°C. The vigreaux column was removed, heating was continued, and the solvent o-xylene distilled at a bath temperature of 170 °C (bp 140 °C). The crude product was vacuum stripped of any additional volatiles using a Kugelrohr apparatus (0.03 mm, 150 °C), and the final product was obtained as a clear, light yellowish liquid, 31.69 g. The ¹H and ¹³C NMR spectra of the product were consistent with the structure of the desired compound.

### 5.8. AcAc-8 The Acetoacetate tetraester of Tetrakis(hydroxymethyl)methane

A 1-L round bottom flask was charged with 34.0 g (0.25 mol) of tetrakis(hydroxymethyl)methane, 174.0 g (1.10 mol) of *tert*-butyl acetoacetate and 100 mL of *o*-xylene. A 6-inch vigreaux column topped with a stillhead was attached, and the reaction mixture was heated to reflux. Distillation of *tert*-butyl alcohol occurred at a bath temperature of 145-150 °C (bp 80-90 °C). The vigreaux column was removed, heating was continued, and the solvent o-xylene distilled at a bath temperature of 170 °C (bp 140 °C). The bath was allowed to cool to 120 °C, and additional volatiles were separated by reheating the mixture to 150 °C under vacuum. The crude product was dissolved in 200 mL of ethyl acetate, and this solution was eluted through 2 inches of silica. The eluent was concentrated, and the concentrate was stripped of any additional volatiles using a Kugelrohr apparatus (0.04 mm, 150 °C). The final product was obtained as a viscous, red liquid, 113.5 g. The ¹H and ¹³C NMR spectra of the product were consistent with the structure of the desired compound.

### 5.9. Lap shear and T-peel performance of adhesives containing various acetoacetoxy-functionalized modifiers

Materials were mixed under high shear using the following formulary:

| Ingredient | Formulation 8-1 | Formulation 8-2 | Formulation 8-4 | Formulation 8-5 | Formulation 8-6 |
|---|---|---|---|---|---|
| EPON 828 | 3.978 g | 3.981 g | 4.033 g | 1.961 g | 1.992 g |
| AcAc-1 | 3.299 g | | | | |
| AcAc-4 | | 3.292 g | | | |
| AcAc-2 | | | | | |
| AcAc-5 | | | 3.299 g | | |
| AcAc-7 | | | | 1.658 g | |
| AcAc-3 | | | | | 1.725 g |
| EPODIL 757 | 6.598 g | 6.619 g | 6.575 g | 3.376 g | 3.321 g |
| Glycidoxy propyl trimethoxy silane | 0.946 g | 0.924 g | 0.929 g | 0.46 g | 0.458 g |

Adhesive bonds, were generated as described above using the adhesive formulations found in the following table (all quantities in grams).

| Ingredient | Adh 8-1 | Adh 8-2 | Adh 8-4 | Adh 8-5 | Adh 8-6 | Adh 8-8 | Adh 8-10 | Adh 8-11 | Adh 8-12 |
|---|---|---|---|---|---|---|---|---|---|
| Form 8-1 | 9.44 | | | | | | | | |
| Form 8-2 | | 10.52 | | | | 10.92 | | | |
| Form 8-4 | | | 9.91 | | | | 10.08 | | |
| Form 8-5 | | | | 9.41 | | | | 9.75 | |
| Form 8-6 | | | | | 9.38 | | | | 9.98 |
| Curing Agent 1 | 4.22 | 4.68 | 4.40 | 5.29 | 4.21 | 2.51 | 2.22 | 2.75 | 2.27 |

Lap shear and T-peel specimens were generated. Adhesive bonds made with Adhesives 8-1 through 8-6 were allowed to cure for 24 hours at room temperature followed by 1 hour at 82°C. Adhesive bonds made with adhesive formulas 8-8 through 8-12 were allowed to cure for 24 hours at room temperature followed by 1/2 hour at 180°C. The specimens were tested to failure as described above in methods 1.1. and 2.1.. The results of these adhesive bond tests are shown in the table below.

| Adhesive | Lap Shear Strength (psi) | Average T-Peel Strength (PIW) |
|---|---|---|
| 8-1 | 5501+281 | 44 |
| 8-2 | 5201+282 | 43 |
| 8-4 | 5636+146 | 50 |
| 8-5 | 5168+300 | 58 |
| 8-6 | 5484+179 | 51 |
| 8-8 | 4714+252 | 28 |
| 8-10 | 5584+114 | 59 |
| 8-11 | 4686+591 | 65 |
| 8-12 | 5256+306 | 30 |

The data in this table indicates that good shear and peel performance can be obtained with low molecular weight AcAc-functionalized materials.

### 6. Examples 6-8: Increased toughening effects by adding acetoacetoxy-functionalized compounds to epoxy resins containing various toughening agents

### 6.1. Example 6: Effect on a triacetylacetonate modifier on the toughness of an adhesive formulation containing a pre-phase separated acrylic resin dispersed in epoxy resin as toughening agent

Two lots of a dispersion of acrylic elastomer in epoxy resin prepared according to Example I of US Patent 4,524,181, were prepared. The lots differed only in date of manufacture. They both contained a pre-dispersed elastomer phase based upon 90% hexyl acrylate and 10% methyl methacrylate. The elastomer phase was 22.5% of the composition. The elastomer phase was stabilized by 5% by weight of monomer of a stabilizer made from the adduct of EPON 1009 and acrylic acid. The remainder of the compositions is EPON 828. The following Table contains the formulations used to evaluate the effect of a tri-acetylacetonate modifier on structural adhesive bond properties.

| Ingredient | Formula 1-1 | Formula 1-2 | Formula 1-3 | Formula 1-4 |
|---|---|---|---|---|
| Acrylic in Epoxy Dispersion Lot 1 | 5.621 g | 5.623 g | | |
| Acrylic in Epoxy Dispersion Lot 2 | | | 5.657 g | 5.643 g |
| Epon 828 | 17.648 g | 19.35 g | 17.873 g | 19.388 g |
| K-Flex XMB-301 | 1.793 g | | 1.792 g | |

These mixtures were placed under heat lamps on a roller mill for 3 hours.

Adhesive compositions were generated using the following formulary:

| Ingredient | Adhesive 1-1 | Adhesive 1-2 | Adhesive 1-3 | Adhesive 1-4 |
|---|---|---|---|---|
| Formula 1-2 | 8.871 g | | | |
| Formula 1-2 | | 8.350 g | | |
| Formula 1-3 | | | 8.447 g | |
| Formula 1-4 | | | | 8.603 g |
| TTD | 2.624 g | 2.326 g | 2.515 g | 2.369 g |

Adhesives were mixed in a metal cup until homogenous. The adhesives were allowed to "rest" for about 1.5 hours to build viscosity before application to the metal adherends. Lap shear and T-peel specimens were generated as described above in methods 1.2. and 2.2. The adhesive bonds were cured at room temperature for 24 hours followed by one hour at 82°C. The results of adhesive bond strength tests are shown in the following Table.

| Adhesive | Lap Shear Strength (psi) | Average T-Peel Strength (PIW) |
|---|---|---|
| 1-1 | 5862±88 | 31.5 |
| 1-2 | 5401±86 | 25.4 |
| 1-3 | 5546±84 | 34.4 |
| 1-4 | 5386±85 | 26 |

These results indicate that the addition of the acetoacetoxy-functionalized modifier provides an increase in toughness as measured by T-peel strength with minimal effect on lap shear properties.

### 6.2. Example 7: Effect on a triacetylacetonate modifier on the toughness of an adhesive formulation containing a core/shell polymer dispersed in an epoxy resin (EPON 828) as toughening agent (Kaneka MX-120)

The following Table contains the formulations used to evaluate the effect of a tri-acetylacetonate modifier on structural adhesive bond properties.

| Ingredient | Formula 3-1 | Formula 3-2 |
|---|---|---|
| MX-120 | 35.373 g | 35.367 g |
| EPODIL 757 | 6.593 g | 6.609 g |
| EPON 828 | 3.993 g | 7.06 g |
| K-Flex XMB-301 | 3.320 g | |
| Glycidoxy propyl trimethoxy silane | 0.943 g | 0.955 g |

These mixtures were placed under heat lamps on a roller mill for 3 hours.

Curing Agent 1 was generated in the following fashion. 94 parts of 4,7,10-trioxa-1,13-tridecane diamine (TTD) was weighed into a container. 55 grams of EPON 828 was added. The mixture was stirred until homogenous. The mixture was heated to between 60 and 80°C. The reaction was allowed to proceed for one hour, after which heat was removed. After the mixture had cooled, 17 grams of Ancamine K54 was added. The mixture was stirred until homogenous.

Adhesive compositions were generated using the following formulary:

| Ingredient | Adhesive 3-1 | Adhesive 3-2 | Adhesive 3-3 | Adhesive 3-4 |
|---|---|---|---|---|
| Formula 3-1 | 10.032 g | | 10.068 g | |
| Formula 3-2 | | 10.041 g | | 10.071 g |
| Curing Agent 1 | 5.041 g | 4.656 g | 2.588 g | 2.425 g |

Lap shear and T-peel specimens were generated as described above in 6.1. The viscosity of these adhesives builds rapidly after mixing, providing a thixotropic mass that will resist sag during application. Therefore, care was taken to generate T-peel specimens quickly after mixing. Bonds made with Adhesives 3-1 and 3-2 were kept at room temperature for 24 hours followed by a post-cure at 82°C for one hour. Bonds made with Adhesives 3-3 and 3-4 were kept at room temperature for 24 hours followed by a post-cure at 180°C for ½ hour. The results of adhesive bond strength tests are shown in the following Table.

| Adhesive | Lap Shear Strength (psi) | Average T-Peel Strength (PIW) |
|---|---|---|
| 3-1 | 5634±134 | 33 |
| 3-2 | 6184±241 | 24 |
| 3-3 | 6126±54 | 44 |
| 3-4 | 6153±110 | 36 |

These results indicate that the addition of the modifier provides an increase toughness as expressed as T-peel strength with minimal effect on lap shear properties. In addition, the results show that the adhesive can be formulated to be significantly off-stoichiometry.

### 6.3. Example 8: Effect on a triacetylacetonate modifier on the toughness of an adhesive formulation containing a butadiene-nitrile rubber as toughening agent

CTBN-RLPs (carboxy terminated butadiene nitrile reactive liquid polymers) were obtained from Emerald Performance Materials (Cuyahoga Falls OH, USA). The CTBN-RLPs were pre-rcactcd with cpoxy resin using triphcnyl phosphinc (catalyst) as described in US Patent 4,476,285. 40 parts by weight of the CTBN-RLP was placed in 60 parts of EPON 828. The reaction mixture was heated to 160°C and 0.4 parts of triphenylphosphine was added. After I hour, the reacted material was decanted from the reaction vessel and allowed to cool to room temperature.

The following Table contains formulations used to determine the effect of adding an acetylacetonate modifier to a resin based upon CTBN.

**Table**

| Ingredient | Formula 2-1 | Formula 2-2 | Formula 2-3 | Formula 2-4 | Formula 2-5 | Formula 2-6 |
|---|---|---|---|---|---|---|
| 40% CTBN 1300 X31 in EPON 828 | 7.602 g | 7.504 g | | | | |
| 40% CTBN 1300X13 in EPON 828 | | | 7.561 g | 7.579 g | | |
| 40% CTBN 1300X9 in EPON 828 | | | | | 7.530 g | 7.485 g |
| Flex XMB-301 | 1.753 g | | 1.768 g | | 1.755 g | |
| EPON 828 | 15.776 g | 17.534 g | 15.818 g | 17.592 g | 15.775 g | 17.644 g |

Adhesive compositions were generated using the following formulary:

| Ingredient | Adhes. 2-1 (g) | Adhcs. 2-2 (g) | Adhes. 2-3 (g) | Adhcs. 2-4 (g) | Adhcs. 2-5 (g) | Adhes. 2-6 (g) |
|---|---|---|---|---|---|---|
| Formula 2-1 | 9.261 | | | | | |
| Formula 2-2 | | 8.737 | | | | |
| Formula 2-3 | | | 9.319 | | | |
| Formula 2-4 | | | | 8.681 | | |
| Formula 2-5 | | | | | 8.614 | |
| Formula 2-6 | | | | | | 8.253 |
| Formula 2-7 | | | | | | |
| Formula 2-8 | | | | | | |
| TTD | 2.552 | 2.226 | 2.557 | 2.208 | 2.364 | 2.119 |

Adhesives were mixed in a metal cup until homogenous. The adhesives were allowed to "rest" for about 1.5 hours to build viscosity before application to the metal adherends. Lap shear and T-peel specimens were generated as described above. The adhesive bonds were cured at room temperature for 24 hours followed by one hour at 82°C. The results of adhesive bond strength tests are shown in the following Table.

| Adhesive | Lap Shear Strength (psi) | Average T-Peel Strength (PIW) |
|---|---|---|
| 2-1 | 5456±61 | 37.6 |
| 2-2 | 4690±123 | 29.9 |
| 2-3 | 5057±198 | 30.7 |
| 2-4 | 4984±339 | 17.2 |
| 2-5 | 5082±252 | 35.6 |
| 2-6 | 5124±135 | 30.8 |

These results indicate that the addition of the modifier provides an increase in T-peel strength (toughness) with minimal effect on lap shear properties.

### 7. Example 9 (Ex 9) and comparative example C9

Two component adhesives were prepared using the ingredients as shown in the table below. The comparative example C9 corresponds to example 9 with the difference that no acetoacetoxy-functionalized polymer was added. Instead somewhat more core/shell polymer was used in C9. The compositions were prepared as follows:

### Preparation of Part A:

TDD (amine curative) was heated to 80°C. Small portions of Epon 828 were added such that the temperature did not rise above 100 °C. Ancamine K54 was added and the mixture was stirred for further 5 minutes. The filler were added at 23°C while stirring for I minute using a high speed mixer (DAC 150 FVZ Speedmixer, Hauschild Engineering, Germany) at 3000 rpm.

### Preparation of Part B

Epoxy resin and the reactive diluent Epodil 757 were mixed at 23 °C with stirring. The core-shell polymer Paraloid EXL 2600 was added in small portions with stirring for 15 minutes. After an additional stirring for 30 minutes, the mixture was heated to 80°C and held for 90 minutes. The solution was cooled down to room temperature. The acetoacetoxy polymer K-Flex MX B301 and filler were subsequently added and homogenized with a high speed mixer (a DAC 150 FVZ Speedmixer, Hauschild Engineering, stirring at 3000 rpm for I minute after each addition at 23°C).

### Mixing of Part A and Part B

Part A and Part B were mixed in a high speed mixer at 3000 rpm for one minute.

Table 1 indicates that despite a greater amount of core/shell polymer in C9, the mechanical properties of the cured adhesive were inferior to those of example 9.

| | **C9 (%wt)** | **Ex. 9 (%wt)** |
|---|---|---|
| **PartB** | | |
| Epon 828 | 37.5 | 33.1 |
| Epodil 757 | 9.9 | 8.7 |
| Paraloid EXL 2600 | 21.2 | 18.7 |
| K-Flex XM-B301 | 0.0 | 7.5 |
| Filler* | 13.3 | 11.7 |

| **Part A** | | |
|---|---|---|
| TTD | 8.4 | 9.4 |
| Epon 828 | 4.9 | 5.5 |
| Ancamine K54 | 1.5 | 1.7 |
| Filler** | 3.2 | 3.5 |
| Total of A +B represents 100% | | |
| Overlap-Shear-Strength (MPa) *** | 19.5 | 23.2 |
| T-Peel (N/25mm)*** | 146.3 | 213.8 |
| Dynamic Wedge Impact test, Fracture Energy (J)*** | 20.2 | 25.0 |

| | | |
|---|---|---|
| *composition of filler (C9/Ex9): silane Z6040 (1.4/1.2), Apyral 24 ESF (2.8/2.3), Shieldex AC5 (5.0/4.4), Cab-O-Stl TS-720 (2.8/2.5), Glass beads class IV (1.1/0.9), **composition of filler (C9/Ex9): Apyral 24 ESF (2.9/3.2), Cab-O-Sil TS-720 (0.2/0.2), ***samples were cured for 30 min at 180 °C in a ventilated oven and allowed to equilibrate to room-temperature before testing. | | |

### 8. Examples 10 to 12

Examples 10 to 12 show the impact on increasing amounts of acetoacetoxy-functionalized polymer and improved curing speed by addition of curing catalyst. The ingredients and the mechanical properties are shown in the table below.

### Preparation of Part A:

TDD (amine curative) was heated to 80°C. Small portions of Epon 828 were added such that the temperature did not rise above 100 °C. Ancamine K54 was added and the mixture was stirred for further 5 minutes. Calcium nitrate (in example 11) was dispersed with a dispersing disk and the mixture was stirred for 6 hours. The filler (e.g. Apyral 24ESF) was added at 23°C while stirring for 1 minute using a high speed mixer (DAC 150 FVZ Speedmixer, Hauschild Engineering, Germany) at 3000 rpm.

### Preparation of Part B and mixture of part A and B

Part B and the mixture of part A and B were carried out as described in Example 9.

| | **Ex. 10** | **Ex. 11** | **Ex. 12** |
|---|---|---|---|
| **PartB** | | | |
| Epikote 828 | 36.3 | 34.3 | 33.1 |
| Epodil 757 | 9.6 | 9.1 | 8.7 |
| Paraloid EXL 2600 | 20.6 | 19.4 | 18.7 |
| K-Flex XM-B301 | 2.1 | 4.5 | 7.5 |
| Filler | 12.8 | 12.2 | 11.7 |

| **Part A** | | | |
|---|---|---|---|
| TTD | 8.7 | 8.9 | 9.4 |
| Epon 828 | 5.1 | 5.2 | 5.5 |
| Ancamine K54 | 1.6 | 1.6 | 1.7 |
| Calciumnitrate-tetrahydrate | 0.0 | 1.5 | 0.0 |
| Filler | 3.3 | 3.3 | 3.5 |
| Total of A +B represents 100% | | | |
| Overlap-Shear-Strength (MPa) (curing at 120°C for | ++ | 1.6 | ++ |
| 40 seconds)** | | | |
| Overlap-Shear-Strength (MPa) (curing at 120°C for 60 seconds)** | ++ | 3.1 | ++ |
| Overlap-Shear-Strength (MPa) (curing at 130°C for 40 seconds)** | ++ | 3.6 | ++ |
| Overlap-Shear-Strength (MPa)* | 21.0 | 20.8 | 23.2 |
| T-Peel (N/25mm)* | 135.2 | 169.5 | 213.8 |
| Dynamic Wedge Impact test*, Fracture Energy (J) | 21.6 | 23.3 | 25.0 |

| | | | |
|---|---|---|---|
| * samples were cured for 30 min at 180 °C in a ventilated oven and were then allowed to equilibrate to room-temperature. ** partially curing: the test assembly was placed between the inductors of a portable induction curing device (Model EW5 from IFF-GmbH, Ismaning, Germany) and cured using a curing cycle, i.e. after heating to the chosen curing temperature (e.g. 120°C) the temperature was kept constant for the chosen period (e.g. 40 s) followed by a cooling period to room temperature. Curing was carried out after the chosen temperature was achieved and the curing device was removed after the chosen period (e.g. 40 s) was completed. ++ values below 1.6 | | | |

### 9. Example 13 (Ex 13) and comparative example C 13

The ingredients used for preparing the composition for Ex13 and C13 are shown in the table below.

### Preparation of Part A:

TDD (amine curative) and small portions of Epon 828 were mixed together at room temperature (23°C) for 2 hours. The mixture was then heated to 80°C and stirred at this temperature for 2 hours. Then the mixture was cooled down to room temperature. Ancamine K54 and filler (e.g. Cab-o-Sil) were added subsequently at 23°C while stirring for 1 minute using a high speed mixer (DAC 150 FVZ Speedmixer, Hauschild Engineering, Germany) at 3000 rpm.

### Preparation of Part B:

Epoxy resin Epon 828, core/shell polymer and Novolac resin D.E.N. 431 were mixed at room temperature (23°C) using the speedmixer at 3000 rpm for I minute. The mixture was heated up to 85 °C in a ventilated oven for approximately 15 minutes after it was stirred again at 3000 rpm for one minute. Epikote 6049 was added under high speed as above after which the mixture was heated again to 85°C in an ventilated oven for further 10 minutes. The mixture was cooled down to 50°C. The acetoacetoxy-functionalized polymer K-Flex MX B301 and filler (Shieldex AC5 and Cab-o-Sil TS 720 (weight ratio 1:1)) were added subsequently and homogenized with a high speed mixer (a DAC 150 FVZ Speedmixer, Hauschild Engineering, stirring at 3000 rpm for 1 minute after each addition at 23°C).

### Mixing of Part A and Part B:

Part A and Part B were mixed in a high speed mixer at 3000 rpm for one minute.

The comparative example was prepared in the same way except that no acetoacetoxy-functionalized polymer was added.

Both mixtures were subjected to an environmental fatigue test. The test was carried out with six samples of Ex13 and C13 each. After 4.00 x 10⁷ cycles all samples of C 13 but none of Ex13 failed.

| | | **C13 (wt%)** | **Ex. 13 (wt%)** |
|---|---|---|---|
| **PartB** | | | |
| | | | |
| Epon 828 | | 19.1 | 19.1 |
| Epodil 757 | | 6.4 | 4.4 |
| Paraloid EXL 2600 | | 13.5 | 13.6 |
| K-Flex XM-B301 | | 0.0 | 2.0 |
| Epikote 6049 | | 17.1 | 17.1 |
| D.E.N 431 | | 9.6 | 9.6 |
| Filler | | 13.9 | 13.9 |

| **Part A** | | | |
|---|---|---|---|
| TTD | | 10.5 | 10.4 |
| Epon 828 | | 4.1 | 4.1 |
| Ancamine K54 | | 2.0 | 2.0 |
| Filler | | 3.8 | 3.8 |
| Total of A +B represents 100% | | | |

## Claims

1. A curable adhesive composition comprising
(i) one or more epoxy-resins,
(ii) one or more toughening agents, selected from core/shell polymers, butadiene nitrile rubbers, acrylic polymers and copolymers,
(iii) one or more curing agent capable of cross-linking the epoxy resins,
(iv) one or more acetoacetoxy-functionalized compounds.

2. The composition of claim 1, wherein the acetoacetoxy-functionalized compound has a molecular weight of from about 100 to about 10,000 g/mol.

3. The composition according to any one of the preceding claims wherein the acetoacetoxy-functionalized compound is a compound bearing at least one acetoacetoxy group and wherein the compound is selected from the group consisting of polyols, polyethers, polyesters, polyether polyols, polyester polyols, polyether polyesters.

4. The composition according to any one of the preceding claims wherein the acetoacetoxy-functionalized compound has the general formula 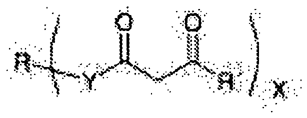 wherein
X is an integer from 1 to 10, preferably from 1 to 3;
Y represents O S or NH;
R represents a residue selected from the group of residues consisting of polyhydroxy alkyl, polyhydroxy aryl or a polyhydroxy alkylaryl, polyoxy alkyl, polyoxy aryl and polyoxy alkylaryl; polyoxy polyhydroxy alkyl, -aryl, -alkylaryl, or polyhydroxy polyester alkyl,- aryl or -alkylaryl, wherein R is linked to Y via a carbon atom, and wherein, if X is other than 1, R is linked to Y via the number of carbon atoms corresponding to X; and
R' represents a C₁-C₁₂ linear or branched or cyclic alkyl.

5. The composition according to any one of the preceding claims further comprising a secondary curing agent having the structure of the formula: 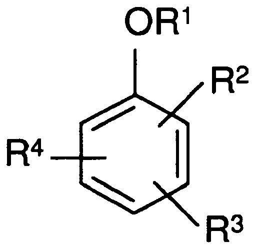 wherein
R¹ is H or alkyl;
R² is -CHNR⁵R⁶;
R³ and R⁴ may be, independently from each other, present or absent and when present R³ and R⁴ are -CHNR⁵R⁶;
R⁵ and R⁶ are, independent from each other, alkyl, preferably -CH₃ or -CH₂CH₃.

6. The composition according to any one of the preceding claims further comprising a metal catalyst in an amount of less than 3% wt based on the total weight of the composition.

7. The composition according to any one of the preceding claims being provided in at least two parts, comprising a part A and separate therefrom a part B, wherein part B comprises the epoxy resin, the toughening agent and the acetoacetoxy-functionalized compound and wherein part A comprises the curing agent.

8. The composition according to any one of the preceding claims which has a cohesive strength measured on steel of at least 1 MPa after curing at 120°C for 40 seconds.

9. The composition according to any one of the preceding claims which has a dynamic impact resistance of at least 13 J as measured on steel after curing at 180°C for 30 minutes.

10. A cured composition obtainable by curing the composition according to any one of claims 1 to 9.

11. An article comprising the cured composition of claim 10.

12. Use of composition according to any one of claims 1 to 9 in the bonding of components of a vehicle.

13. A process for joining parts comprising applying a composition according to any one of claims 1 to 9 to a first part, adding the part to be joined and curing the composition.

14. Process for preparing an adhesive composition according to any one of claims 1 to 9, comprising combining a composition comprising at least one curing agent capable of cross-linking epoxy resins with a composition comprising at least one toughening agent and at least one acetoacetoxy-functionalized compound.

## Patentansprüche

1. Härtbare Klebstoffzusammensetzung, umfassend
(i) ein oder mehrere Epoxidharze,
(ii) einen oder mehrere Zähigkeitsvermittler, ausgewählt unter Kern/Schale-Polymeren, Butadien-Nitril-Kautschuken, Acrylpolymeren und -copolymeren,
(iii) ein oder mehrere Härtungsmittel, die zur Vernetzung der Epoxidharze befähigt sind,
(iv) eine oder mehrere acetoacetoxyfunktionalisierte Verbindungen.

2. Zusammensetzung nach Anspruch 1, wobei die acetoacetoxyfunktionalisierte Verbindung ein Molekulargewicht von etwa 100 bis etwa 10.000 g/mol aufweist.

3. Zusammensetzung nach einem der vorhergehenden Ansprüche, wobei es sich bei der acetoacetoxyfunktionalisierten Verbindung um eine Verbindung mit mindestens einer Acetoacetoxygruppe handelt und die Verbindung aus der Gruppe bestehend aus Polyolen, Polyethern, Polyestern, Polyetherpolyolen, Polyesterpolyolen und Polyetherpolyestern ausgewählt ist.

4. Zusammensetzung nach einem der vorhergehenden Ansprüche, wobei die acetoacetoxyfunktionalisierte Verbindung die allgemeine Formel 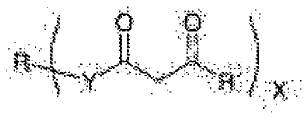 aufweist, wobei
X für eine ganze Zahl von 1 bis 10, vorzugsweise von 1 bis 3, steht;
Y für O, S oder NH steht;
R für einen Rest aus der Gruppe von Resten bestehend aus Polyhydroxyalkyl, Polyhydroxyaryl oder Polyhydroxyalkylaryl, Polyoxyalkyl, Polyoxyaryl und Polyoxyalkylaryl, Polyoxypolyhydroxyalkyl, - aryl, -alkylaryl oder Polyhydroxypolyesteralkyl, -aryl oder -alkylaryl ausgewählt ist, wobei R über ein Kohlenstoffatom an Y gebunden ist, und
wobei dann, wenn X von 1 verschieden ist, R über die X entsprechende Zahl von Kohlenstoffatomen an Y gebunden ist, und R' für ein lineares oder verzweigtes oder cyclisches C₁-C₁₂-Alkyl steht.

5. Zusammensetzung nach einem der vorhergehenden Ansprüche, ferner umfassend ein sekundäres Härtungsmittel mit der Struktur der Formel: 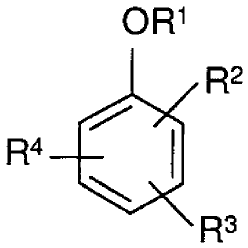 wobei
R¹ für H oder Alkyl steht;
R² für -CHNR⁵R⁶ steht;
R³ und R⁴ unabhängig voneinander anwesend oder abwesend sein können und dann, wenn sie anwesend sind, für -CHNR⁵R⁶ stehen;
R⁵ und R⁶ unabhängig voneinander für Alkyl, vorzugsweise -CH₃ oder -CH₂CH₃ stehen.

6. Zusammensetzung nach einem der vorhergehenden Ansprüche, ferner umfassend einen Metallkatalysator in einer Menge von weniger als 3 Gew.-%, bezogen auf das Gesamtgewicht der Zusammensetzung.

7. Zusammensetzung nach einem der vorhergehenden Ansprüche, die in mindestens zwei Teilen bereitgestellt wird, umfassend einen Teil A und separat davon einen Teil B, wobei Teil B das Epoxidharz, den ZähigkeitsVermittler und die acetoacetoxyfunktionalisierte Verbindung umfaßt und Teil A das Härtungsmittel umfaßt.

8. Zusammensetzung nach einem der vorhergehenden Ansprüche, die eine an Stahl gemessene Kohäsionsfestigkeit von mindestens 1 MPa nach Härtung bei 120°C über einen Zeitraum von 40 Sekunden aufweist.

9. Zusammensetzung nach einem der vorhergehenden Ansprüche, die eine dynamische Schlagzähigkeit von mindestens 13 J, gemessen an Stahl nach Härtung bei 180°C über einen Zeitraum von 30 Sekunden, aufweist.

10. Gehärtete Zusammensetzung, die durch Härten der Zusammensetzung nach einem der Ansprüche 1 bis 9 erhältlich ist.

11. Gegenstand, umfassend die gehärtete Zusammensetzung nach Anspruch 10.

12. Verwendung der Zusammensetzung nach einem der Ansprüche 1 bis 9 beim Verbinden von Bauteilen eines Fahrzeugs.

13. Verfahren zum Zusammenfügen von Teilen, bei dem man auf ein erstes Teil eine Zusammensetzung nach einem der Ansprüche 1 bis 9 aufbringt, das damit zusammenzufügende Teil hinzufügt und die Zusammensetzung härtet.

14. Verfahren zur Herstellung einer Klebstoffzusammensetzung nach einem der Ansprüche 1 bis 9, bei dem man eine Zusammensetzung, die mindestens ein Härtungsmittel, das zur Vernetzung von Epoxidharzen befähigt ist, umfaßt, mit einer Zusammensetzung, die mindestens einen Zähigkeitsvermittler und mindestens eine acetoacetoxyfunktionalisierte Verbindung umfaßt, vereinigt.

## Revendications

1. Composition adhésive durcissable comprenant
(i) une ou plusieurs résines époxydes,
(ii) un ou plusieurs agents renforçants, choisis parmi les polymères à structure noyau/enveloppe, les caoutchoucs butadiène-nitrile, les polymères et copolymères acryliques,
(iii) un ou plusieurs agents durcisseurs capables de réticuler les résines époxydes,
(iv) un ou plusieurs composés dotés d'une fonctionnalité acétoacétoxy.

2. Composition selon la revendication 1, dans laquelle le composé doté d'une fonctionnalité acétoacétoxy a une masse moléculaire d'environ 100 à environ 10 000 g/mol.

3. Composition selon l'une quelconque des revendications précédentes dans laquelle le composé doté d'une fonctionnalité acétoacétoxy est un composé portant au moins un groupe acétoacétoxy et dans laquelle le composé est choisi dans le groupe constitué par les polyols, les polyéthers, les polyesters, les polyols de polyéthers, les polyols de polyesters, les polyesters de polyéthers.

4. Composition selon l'une quelconque des revendications précédentes dans laquelle le composé doté d'une fonctionnalité acétoacétoxy répond à la formule générale 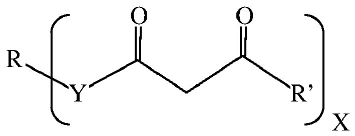 dans laquelle
X représente un entier de 1 à 10, de préférence de 1 à 3 ;
Y représente O, S ou NH ;
R représente un résidu choisi dans le groupe constitué par les résidus
polyhydroxyalkyle, polyhydroxyaryle ou polyhydroxyalkylaryle, polyoxyalkyle, poloxyaryle et polyoxyalkylaryle ; polyoxypolyhydroxyalkyle, -aryle, -alkylaryle ou polyhydroxypolyesteralkyle, -aryle ou -alkylaryle, R étant lié à Y par l'intermédiaire d'un atome de carbone et
R étant, si X est différent de 1, lié à Y par l'intermédiaire du nombre d'atomes de carbone correspondant à X ; et
R' représente un alkyle en C₁-C₁₂ linéaire ou ramifié ou cyclique.

5. Composition selon l'une quelconque des revendications précédentes comprenant en outre un agent durcisseur secondaire ayant la structure représentée par la formule : 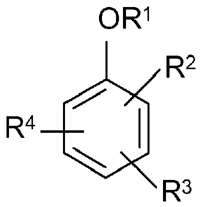 dans laquelle
R¹ est H ou un alkyle ;
R² est -CHNR⁵R⁶ ;
R³ et R⁴ peuvent être, indépendamment l'un de l'autre, présents ou absents et
lorsqu'ils sont présents R³ et R⁴ sont -CHNR⁵R⁶ ;
R⁵ et R⁶ sont, indépendamment l'un de l'autre, un alkyle, de préférence -CH₃ ou -CH₂CH₃.

6. Composition selon l'une quelconque des revendications précédentes comprenant en outre un catalyseur métallique en une quantité inférieure à 3 % en poids sur la base du poids total de la composition.

7. Composition selon l'une quelconque des revendications précédentes, laquelle est fournie en au moins deux parties, comprenant une partie A et, séparée de celle-ci, une partie B, dans laquelle la partie B comprend la résine époxyde, l'agent renforçant et le composé doté d'une fonctionnalité acétoacétoxy et dans laquelle la partie A comprend l'agent durcisseur.

8. Composition selon l'une quelconque des revendications précédentes qui a une force de cohésion mesurée sur de l'acier d'au moins 1 MPa après durcissement à 120 °C pendant 40 secondes.

9. Composition selon l'une quelconque des revendications précédentes qui a une résistance au choc dynamique d'au moins 13 J telle que mesurée sur de l'acier après durcissement à 180 °C pendant 30 minutes.

10. Composition durcie pouvant être obtenue par durcissement de la composition selon l'une quelconque des revendications 1 à 9.

11. Article comprenant la composition durcie selon la revendication 10.

12. Utilisation d'une composition selon l'une quelconque des revendications 1 à 9 dans le collage de composants d'un véhicule.

13. Procédé permettant d'unir des pièces comprenant l'application d'une composition selon l'une quelconque des revendications 1 à 9 sur une première pièce, l'ajout de la pièce devant être unie et le durcissement de la composition.

14. Procédé permettant de préparer une composition adhésive selon l'une quelconque des revendications 1 à 9, comprenant la combinaison d'une composition comprenant au moins un agent durcisseur capable de réticuler des résines époxydes avec une composition comprenant au moins un agent renforçant et au moins un composé doté d'une fonctionnalité acétoacétoxy.
